# EUROPEAN PATENT APPLICATION

(11) **EP 4 657 851 A1**
(43) Date of publication of application: **03.12.2025**
(21) Application number: 24178770.4
(22) Date of filing: 29.05.2024
(51) Int. Cl.: H04N 17/00, G02B 27/14, G06T 5/80, H04N 23/55, H04N 23/58, H04N 23/698

(54) **CONTROL METHOD IN AN APPARATUS HAVING A CAMERA SYSTEM FOR RECORDING AN ENVIRONMENT OF SAID APPARATUS**

(71) Applicant: AUMOVIO Germany GmbH, 60488 Frankfurt am Main (DE)
(72) Inventor: Gieruc, Theo, 30175 Hannover (DE); Bernhard, Sebastian, 30175 Hannover (DE); Kästingschäfer, Marius, 20175 Hannover (DE)
(74) Representative: Aumovio Corporation

(57) **Abstract**

A control method in an apparatus having a camera system (10) for recording an environment of said apparatus, the camera system (10) including a camera device (12) for capturing an image across a device field-of-view of the camera device (12) and an optical component (14) for partitioning the device field-of-view at least into a first system field-of-view (16a) of the camera system (10) and a second system field-of-view (16b) of the camera system (10), the second system field-of-view (16b) being different to the first system field-of-view (16a) such that the camera device (12) is capable of capturing a superimposed image (18) at least across the first system field-of-view (16a) and the second system field-of-view (16b).

## Description

### TECHNICAL FIELD

The invention relates to a control method in an apparatus having a camera system for recording an environment of said apparatus. The invention further relates to a camera system for recording an environment thereof, a controlling device for controlling the apparatus, a computer program, and a computer-readable storage medium.

### BACKGROUND

In the field of autonomous robots, efficient perception of the environment may be important for safe and reliable operation. Capturing down-facing images may be especially important for tasks such as teleoperation and obstacle avoidance, where it is primordial to visualize the close surrounding of the robot. Existing solutions for capturing downward-facing images typically rely on dedicated high field-of-view cameras or sensors specifically positioned for downward vision. Examples of prior art include: (X) incorporating downward-facing cameras with wide-angle lenses; (Y) utilizing LiDAR or ultrasonic sensors for ground detection.

Such known techniques may have drawbacks. For example, solutions relying solely on LiDAR or ultrasonic sensors (Y) may not provide sufficient visual information for effective teleoperation, limiting the operator's situational awareness (limited visual information for teleoperation). The incorporation of dedicated downward-facing cameras or sensors may further increase the overall cost of a robot system (high costs). Designing and integrating additional cameras or sensors into the robot structure may introduce complexity during manufacturing and assembly (complex manufacturing). Integrating additional cameras (X) or sensors (Y) may also strain the available USB bandwidth, potentially leading to degraded data transmission and performance issues (USB bandwidth limitations). A high number of cameras require high bandwidth for streaming camera images for teleoperation. In areas with bandwidth limitations this may cause problems as the reduction of resolution is required and potentially not all images can be streamed anymore. Additional sensors also may add risk of sensor failure and increase required maintenance.

### SUMMARY OF THE INVENTION

The object of the invention is to provide an improved camera system for recording an environment of an apparatus and a control method in said apparatus.

The object of the invention is achieved by the subject-matter of the independent claims. Advantageous embodiments of the invention are subject-matter of the dependent claims.

In one aspect, the invention provides a control method in an apparatus having a camera system for recording an environment of said apparatus, the camera system including a camera device for capturing an image across a device field-of-view of the camera device and an optical component for partitioning the device field-of-view at least into a first system field-of-view of the camera system and a second system field-of-view of the camera system, the second system field-of-view being different to the first system field-of-view such that the camera device is capable of capturing a superimposed image at least across the first system field-of-view and the second system field-of-view, the method comprising:
a) By the camera system, recording the environment of the apparatus by capturing a superimposed image at least across the first system field-of-view and the second system field-of-view;
b) Processing by separating, from the superimposed image, at least a first image across the first system field-of-view only and/or a second image across the second system field-of-view only; and
c) Generating a control signal for controlling the apparatus based on the processing of step b).

An advantage of the method may be that at least two field-of-views can be tracked or monitored simultaneously with only one camera device. Thus, more information can be gathered with the camera system (including the optical component) than with the camera device alone.

The camera system captures a superimposed image. In other words, the camera system may capture a single image of two field-of-views that are superimposed or overlayed. In yet other words, the camera device may track or monitor at least the first system field-of-view and the second system field-of-view simultaneously.

The method further includes a computer-based or controller-based separating of the superimposed image, so that a (distorted or undistorted) first image depicting or comprising the first field-of-view only/exclusively and a (distorted or undistorted) second image depicting or comprising the second field-of-view only/exclusively may be obtained. Thus, the method combines the advantages of the optical component and the computer/controller-based processing, for instance, the computer/controller-based separating.

The apparatus may be, for example, a mobile robot such as a vehicle. The term "controlling" includes and/or corresponds to triggering an action by and/or in the apparatus. Said action may be, for example, to display the first image and/or the second image on a display device of the apparatus. Additionally, or alternatively, said action may be to perform or stop a movement of the apparatus or parts thereof. Thus, with respect to the vehicle, "controlling" may range, for example, from autonomously navigating the vehicle to assisting a driver in navigating, only.

Preferably, step b) further comprises:
b1) Processing by applying one or more image transformations to the first image and/or the second image for correcting said images when distorted by the optical component, preferably by using one or more computer vision algorithms.

An advantage of the method may be that the optical component can be configured for broadening and/or narrowing the first system field-of-view and/or the second system field-of-view with respect to the device field-of-view. For example, the optical component may include a curved surface therefor.

Such an optical component typically, but not necessarily, leads to distorted images. These distortion can be removed or cleared by the method. The so obtained images look as if they were captured by the camera device alone, but having a broader and/or narrow field-of-view with respect to the device field-of-view. The advantages of the camera system are so further enhanced compared to the camera device alone, again through the combination of the optical component and the computer-based processing, for instance, the computer/controller-based application of one or more image transformations.

Preferably, step b1) further comprises one or both of the following:
b1a) Processing by determining one or more undistortion maps as image transformations, the one or more undistortion maps mapping the distorted first image and/or the distorted second image onto a corresponding undistorted first image and/or a corresponding undistorted second image during a calibration operation; and/or
b2a) Processing by interpolating one or more image areas of the first image and/or the second image when applying an image transformation thereto.

The advantages of the camera system may be additionally, or alternatively, further enhanced when image areas of the (undistorted or distorted) first image and/or the (undistorted or distorted) second image are interpolated.

Preferably, step b) further comprises:
b2) Separating by feeding the superimposed image into a computing module, the computing module including a machine learning model, a neural network model, a generative adversarial network model, an autoencoder network model, a deep neural network model, and/or a diffusion neural network model.

The separating may be accomplished completely computer-implemented or controller-implemented. For example, a computing module may be configured for separating. For this, the computer module may be trained on a dataset comprising superimposed images as well as first images and/or second images forming said superimposed images. The dataset may be chosen according to the use case. For example, when the method is supposed to be applied in a vehicle, the dataset may comprise (superimposed) images of different traffic and/or road areas. Such road areas may be, for example, road boarders, traffic signs and/or lane marks.

In another aspect, the invention provides a camera system for recording an environment thereof, the camera system including a camera device for capturing an image across a device field-of-view of the camera device and an optical component for partitioning the device field-of-view at least into a first system field-of-view of the camera system and a second system field-of-view of the camera system, the second system field-of-view being different to the first system field-of-view such that the camera device is capable of capturing a superimposed image at least across the first system field-of-view and the second system field-of-view.

The camera system advantageously uses an optical component to enhance one or more features of a camera device alone. Instead of a single device field-of-view, the camera system includes at least two system field-of-views. One of the system field-of-view may still be identical to the device field-of-view, but not necessarily. However, the camera system adds the other one of the system field-of-views to gather more information than with a camera device alone. In the apparatus, the camera system may replace other or reduce the number of camera devices. The optical component may also be configured for partitioning the device field-of-view into more than two system-field-of views.

Preferably, the optical component is configured semi-transparent and/or includes a mirror, a prism, and/or a lens.

The optical component may include a semi-transparent material or and/or a mirror, a prism, and/or a lens for partitioning the device field-of-view at least into the first system field-of-view and the second system field-of-view. The optical component may also include multiple semi-transparent materials or a plurality of mirrors, prisms, and/or lenses therefor. Additionally, or alternatively, the optical component may be configured for partitioning the device field-of-view into more than two system field-of-views.

Preferably, the first system field-of-view includes a reflected field-of-view reflected from the optical component and/or the second system field-of-view includes a transmitted field-of-view transmitted through the optical component.

Preferably, the first system field-of-view and the second system field-of-view:
- are arranged inclined to each other by a separating angle *α* between 0° and 180°, preferably in the range from 30° to 150°, more preferably from 45° to 135°, more preferably from 60° to 120°, more preferably from 80° to 100°, more preferably of and/or about 90°; and/or
- differ in a respective opening angle *β*; and/or
- are disjoint.

An advantage of the camera system may be that the system field-of-view can be arranged according to the use case. For example, the first system field-of-view can be arranged in a direction to a left side of the camera device or the apparatus, while the second system field-of-view can be arranged in a direction to a right side of the camera device or the apparatus, and vice versa. The first system field-of-view may alternatively be arranged in a forward direction of the camera device or the apparatus, while the second field-of-view may be arranged in a downwards direction of the camera device or the apparatus.

Preferably, the first system field-of-view and/or the second system field-of-view include an opening angle *β* that is different to the opening angle *β* of the device field-of-view.

Alone or both, the first and/or the second field-of-view may be broader and/or narrower than the device field-of-view. The camera system may be thus be adapted to the use case.

Preferably, the camera device includes an image and/or video capturing means.

In this context, the term "image" includes and/or corresponds to any information comprising image data about the environment. Therefore, an image may additionally or alternatively refer to the commonly known term "video", that is, a series of image data in time.

Preferably, the optical component is configured for broadening and/or narrowing the first system field-of-view and/or the second system field-of-view with respect to the device field-of-view, preferably includes a curved surface therefor.

An advantage of the camera system may be that the system field-of-views can be adapted to the use case. For example, when the first system field-of-view is supposed to track or monitor the close environment, it may be useful to have the first system field-of-view broader than the device field-of-view. Additionally, or alternatively, when the second system field-of-view is supposed to track or monitor the far environment, it might be useful to have the second system field-of-view narrower than the device field-of-view.

Any feature, aspect, and/or advantage that is described herein with respect to the camera system may additionally or alternatively apply with respect to the control method, and vice versa.

The skilled person will acknowledge that the features (for example, transmitted/reflected, broader/narrower, closer/nearer, forward/downward) of the first system-of-view and the second system field-of-view may be interchanged, additionally or alternatively.

In another aspect, the invention provides a controlling device for controlling an apparatus, the controlling device having the camera system according to any of the preceding embodiments and means adapted to execute the steps of the method according to any of the preceding embodiments.

The controlling device may be, for example, a driver assistance system for a semi-autonomous or non-autonomous vehicle. Additionally, or alternatively, the controlling device may a navigation system for a fully autonomous vehicle.

Any feature, aspect, and/or advantage that is described herein with respect to the controlling device may additionally or alternatively apply with respect to the control method and/or the camera system, and vice versa.

In another aspect, the invention provides a computer program comprising instructions to cause the controlling device to execute the steps of the method according to any of the preceding embodiments.

Any feature, aspect, and/or advantage that is described herein with respect to the computer program may additionally or alternatively apply with respect to the control method, the camera system, and/or the controlling device, and vice versa.

In another aspect, the invention provides a computer-readable storage medium having stored thereon the computer program.

Any feature, aspect, and/or advantage that is described herein with respect to the computer-readable storage medium may additionally or alternatively apply with respect to the control method, the camera system, the controlling device, and/or the computer program and vice versa.

Some aspects and/or ideas of preferred embodiments of the invention may be described as follows:
Preferred embodiments increase the visible field-of-view for teleoperation and collision avoidance without requiring additional sensors (cameras). By using an existing camera and only requiring an additional curved mirror and several software packages, the preferred embodiments provide a low-cost solution which does not take up extra USB bandwidth. Due to the low complexity of the physically required parts, the embodiments preferably are easy to manufacture, but nevertheless able to provide high quality visual information of the surrounding.

In short, an idea of the preferred embodiments of the invention is a mirror-based downward vision enhancement technique.

Embodiments of the invention preferably have the following advantages and effects:
a) Enhanced Situational Awareness:
   Preferred embodiments of the invention optimize downward vision through a mirror-based solution, empowering operators with superior visual information during teleoperation. This heightened situational awareness and control may surpass LiDAR-based visualizations, ensuring more informed decision-making and operational precision.
b) Cost efficiency:
   The mirror-based approach preferably capitalizes on the existing front-facing camera, negating the necessity for dedicated downward-facing cameras or sensors. This strategic design substantially reduces costs, enabling economical teleoperation retrofitting for a diverse spectrum of mobile robots and minimizing financial barriers.
c) Streamlined manufacturing:
   Leveraging a mirror and digital processing may simplify hardware requirements, negating intricate alterations to the robot's structure. Consequently, manufacturing may become less complex, assembly is preferably simplified, and production timelines are preferably expedited, streamlining the entire manufacturing process.
d) Expanded field-of-view and enhanced perception:
   The mirror-based solution preferably widens the field-of-view for downward vision, utilizing the front-facing camera. Preferably employing software-based image undistortion may ensure accurate representation of the surroundings, eradicating the need for extra cameras. This effectively may mitigate USB bandwidth constraints, optimizing data transmission, and enhancing the robot's perceptual capabilities for superior navigation and obstacle detection.
e) Bandwidth optimization:
   The preferred utilization of a semi-transparent mirror consolidates multiple views into a single image, requiring no additional bandwidth. This innovative approach efficiently maximizes the available resources while delivering comprehensive visual insights.
f) Reduced risk and Maintenance:
   The exclusion of supplementary sensors may diminish the likelihood of sensor failure and obviates the need for extra maintenance of electronic components. This design choice preferably enhances the robot's reliability, longevity, and operational continuity, contributing to sustained performance.

Apart from the field of autonomous delivery robots, the preferred mirror-based embodiment for enhancing downward vision may additionally or alternatively find applications in the following fields:
- driver assistance systems for parking: extending the field-of-view for the driver or reducing the number of sensors needed;
- autonomous aerial vehicles (drones) for improved ground perception during landing or inspection tasks;
- robotic vacuum cleaners or floor cleaning robots for better navigation and obstacle detection on different floor surfaces;
- agricultural robots for enhanced ground perception during crop monitoring or precision farming tasks;
- industrial automation: facilitating precise navigation and object detection in manufacturing or warehouse environments; and/or
- warehouse automation systems for efficient object detection and navigation in multi-level storage environments.

### BRIEF DESCRIPTION OF THE DRAWINGS

Embodiments of the invention are now explained in more detail with reference to the accompanying drawings of which
Fig. 1 shows multiple views (a, b, c, d) of a first embodiment of a camera system;
Fig. 2 shows multiple views (a, b, c) of the camera system of Fig. 1, the camera system having a first system field-of-view;
Fig. 3 shows multiple views (a, b, c) of a second embodiment of a camera system, the camera system having a first system field-of-view and a second system field-of-view;
Fig. 4 shows an embodiment of a control method in an apparatus having the camera system of Fig. 3 for recording an environment of said apparatus;
Fig. 5 shows a first embodiment of a processing operation of the method according to Fig. 4; and
Fig. 6 shows a second embodiment of a processing operation of the method according to Fig. 4.

### DETAILED DESCRIPTION OF THE DRAWINGS

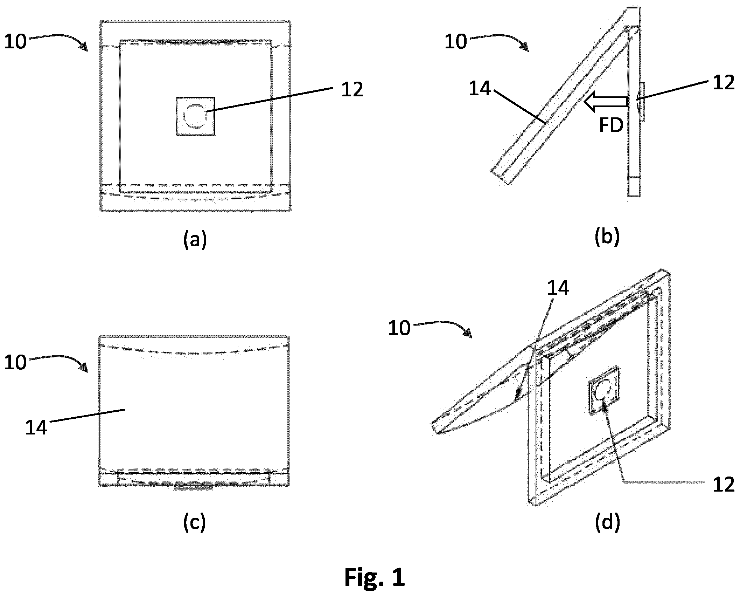

Fig. 1 shows multiple views (a, b, c, d) of a first embodiment of a camera system 10. In detail, Fig. 1 (a) depicts a front view, (b) a side view, (c) a back view, and (d) a perspective view of the camera system 10.

The camera system 10 is configured for recording an environment thereof. The camera system 10 includes a camera device 12 for capturing an image and an optical component 14.

The camera device 12 may include image and/or video capturing means. The camera device 12 is configured for capturing an image across a device field-of-view that is arranged in a forward direction FD of the camera device 12.

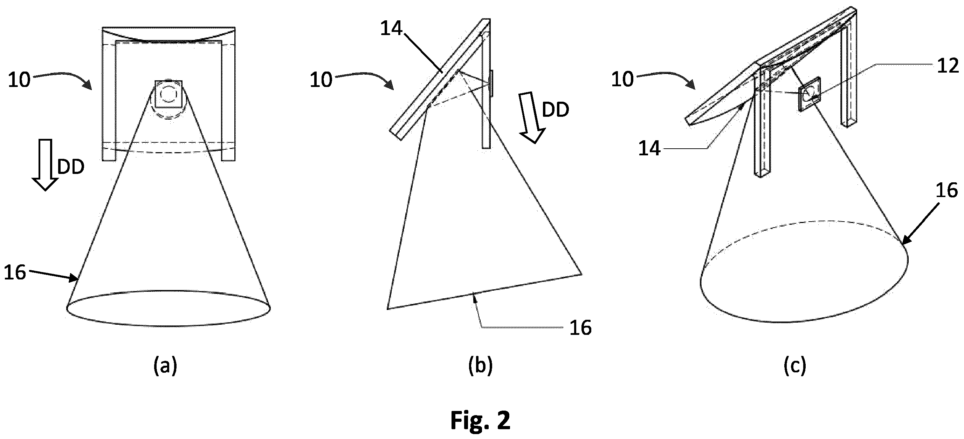

Fig. 2 shows multiple views (a, b, c) of the camera system 10 of Fig. 1. In detail, Fig. 2 (a) depicts again the front view, (b) the side view, and (c) the perspective view of the camera system 10.

The optical component 14 is configured for directing the device field-of-view into a system field-of-view 16. The device field-of-view is in this case directed into the system field-of-view 16 that is arranged in a downwards direction DD of the camera device 12. The system field-of-view 16 may include a reflected field-of-view that is reflected from the optical component 14. The optical component 14 may include, for example, a mirror, a prism, and/or a lens reflecting the device field-of-view.

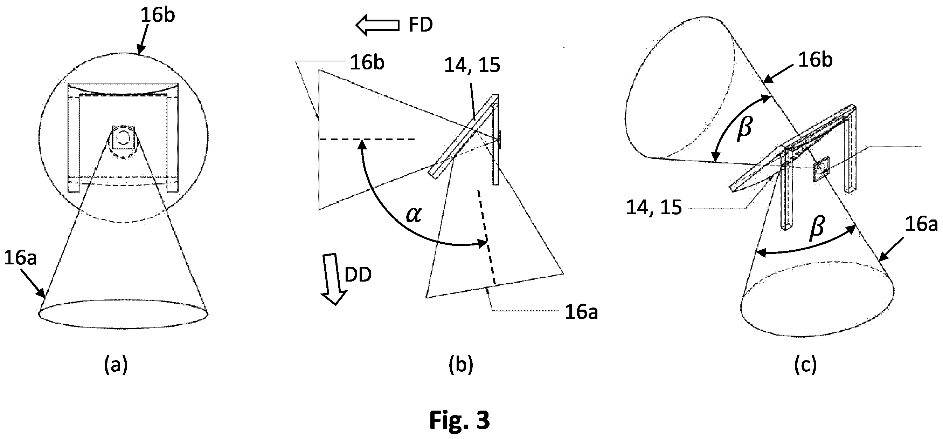

Fig. 3 shows multiple views (a, b, c) of a second embodiment of the camera system 10.

The optical component 14 is in this case configured for partitioning the device field-of-view into a first system field-of-view 16a and a second system field-of-view 16b, the second system field-of-view 16b being different to the first system field-of-view 16a. The term "different" means in this context that the first system field-of-view 16a and the second system field-of-view 16b are not identical. They may differ in one or more parameters as will be explained further below.

The device field-of-view is, in this case, directed into the first system field-of-view 16a that is arranged in the downwards direction DD of the camera device 12. Additionally, the device field-of-view is directed into the second system field-view 16b that is arranged in the forward direction FD of the camera device 12.

The first system field-of-view 16a may include a reflected field-of-view that is reflected from the optical component 14. The second system field-of-view 16b may include a transmitted field-of-view that is transmitted through the optical component 14. The optical component 14 may include, for example, a mirror, a prism, and/or a lens that is configured semi-transparent.

As can be seen, the first system field-of-view 16a and the second system field-of-view 16b are arranged inclined to each other by a separating angle *α* above 90°. However, the scope of invention also comprises embodiments with a separating angle *α* of or below 90°.

Furthermore, the first system field-of-view 16a and the second system field-of-view 16b have an identical opening angle *β*. However, the scope of the invention also comprises embodiments with different respective opening angles *β*. For example, the opening angle *β* of the first system field-of-view 16a may be larger than the opening angle *β* of the second system field-of-view 16b, or vice versa.

Furthermore, the opening angle *β* of the first system field-of-view 16a and/or the opening angle *β* of the second system field-of-view 16b may be larger or smaller than the opening angle *β* of the device field-of-view.

The optical component 14 may include a curved surface 15 for broadening and/or narrowing the first system field-of-view 16a and/or the second system field-of-view 16b with respect to the device field-of-view and/or to each other.

Furthermore, the first system field-of-view 16a and the second system field-of-view 16b are disjoint, distinct, or disjunct. In other words, the first system field-of-view 16a and the second system field-of-view 16b do not overlap. However, the scope of the invention also comprises embodiments with overlapping first system field-of-view 16a and second system field-of-view 16b.

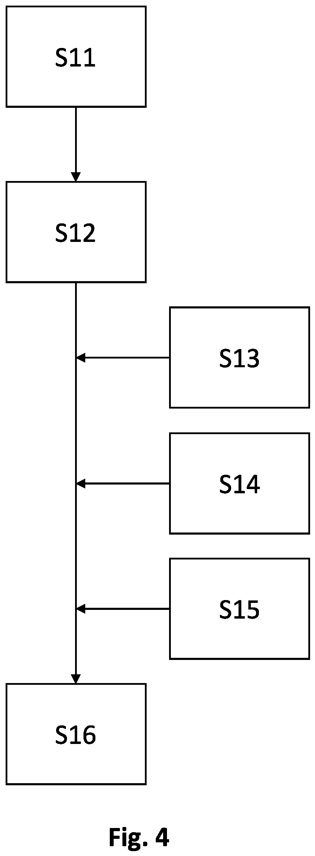

Fig. 4 shows an embodiment of a control method in an apparatus having the camera system 10 of Fig. 3 for recording an environment of said apparatus.

The apparatus may be, for example, a mobile robot such as a vehicle. The vehicle may be configured autonomous, semi-autonomous, or non-autonomous. The camera system 10 may be, for example, mounted on the front of the vehicle.

In a step S11, the method comprises:
- By the camera system 10, recording the environment of the apparatus by capturing a superimposed image 18 across the first system field-of-view 16a and the second system field-of-view 16b.

In a step S12, the method comprises:
- Processing by separating, from the superimposed image 18, a first image 20a, 24a across the first system field-of-view 16a only and/or a second image 20b, 24b across the second system field-of-view 16b only.

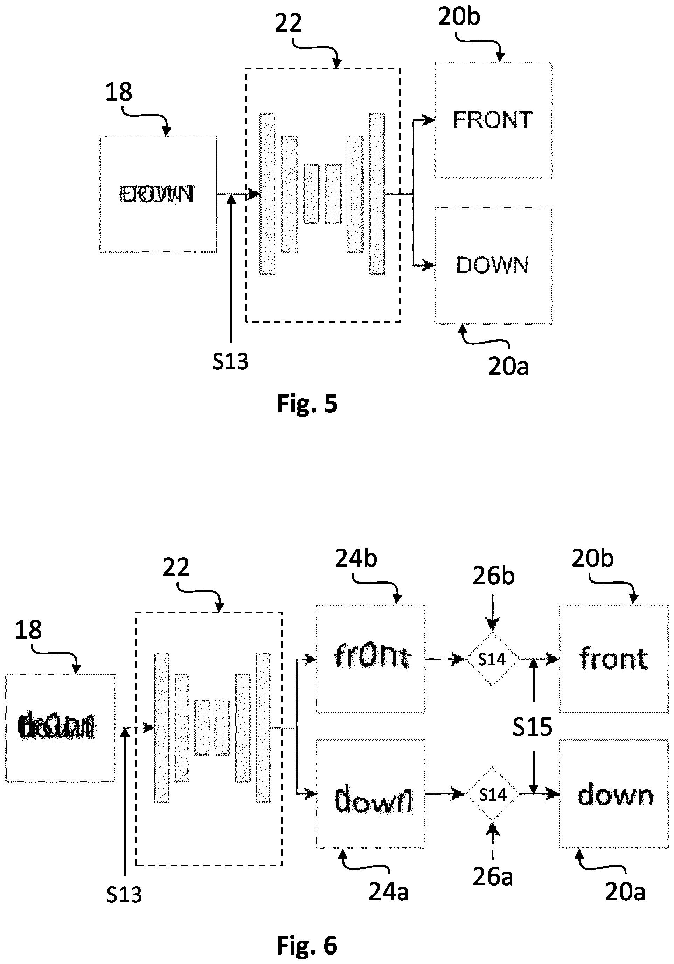

Fig. 5 shows a first embodiment of a processing operation according to step S12 of the method.

The superimposed image 18 depicts the words "DOWN" and "FRONT" on top of each other. The word "DOWN" is captured by the camera system 10 across the first system field-of-view 16a. The word "FRONT" is captured by the camera system 10 across the second system field-of-view 16b.

In a step S13, the superimposed image 18 is fed into a computing module 22. The computing module 22 may include a machine learning model, a neural network model, a generative adversarial network model, an autoencoder network model, a deep neural network model, and/or a diffusion neural network model. The computing module 22 may be trained to separate an undistorted first image 20a and an undistorted second image 20b from the superimposed image 18.

From the processing, the first image 20a including the word "DOWN" and the second image 20b including the word "FRONT" are obtained. Thus, the first image 20a depicts the first system field-of-view 16a only or exclusively. The second image 20b depicts the second system field-of-view 16b only or exclusively.

Fig. 6 shows a second embodiment of a processing operation according to step S12 of the method.

The optical component 14 of the camera system 10 includes, in this case, the curved surface 15. Thus, the superimposed image 18 depicts the words "down" and "front" distorted by the optical component 14 and on top of each other.

In the step S13, the superimposed image 18 is again fed into the computing module 22 for separating a distorted first image 24a and a distorted second image 24b from the superimposed image 18.

In a step S14, the processing is continued by applying an image transformation to the distorted first image 24a and the distorted second image 24b for correcting said images. Said image transformation may include, for example, one or more computer vision algorithms. For example, in such an algorithm, a first undistortion map 26a and a second undistortion map 26b as image transformations can be determined during a calibration operation.

The first undistortion map 26a is then capable of mapping the distorted first image 24a onto the corresponding undistorted first image 20a. The second undistortion map 26b is the capable of mapping the distorted second image 24b onto the corresponding undistorted second image 20b.

In a step S15, the processing may be further continued by interpolating one or more image areas of the undistorted first image 20a and/or the undistorted second image 20b when applying the image transformation according to step S14.

Reference is now made again to Fig. 4.

In a step S16, the method further comprises:
- Generating a control signal for controlling the apparatus based on the processing of step S12.

For example, in the vehicle, the first image 20a and/or the second image 20b may be used for navigating and/or for assisting in navigating the latter. For example, in a situation where the vehicle is controlled for performing a parking operation, it may be useful to observe, track or monitor the first system field-of-view 16a in the downwards direction DD of the camera device 12. In other situations, it may be useful to observe the second system field-of-view 16b in the forward direction FD of the camera device 12 and/or to observe both, the first field-of-view 16a and the second field-of-view 16b simultaneously.

Preferred embodiments may be summarized as follows:
1. Mirror integration:
   A specially designed mirror is preferably positioned in front of the existing front-facing camera of a robot, as shown in Fig. 1 and 2.
2. Curved mirror design:
   The mirror may be curved to provide a wider field-of-view, enabling enhanced downward vision.
3. Digital undistortion:
   The captured image from the curved mirror is preferably digitally undistorted using computer vision algorithms, such as from the OpenCV library, ensuring accurate perception. To undistort an image taken through a curved mirror, the first step may be to calibrate the camera-mirror system to determine the distortion parameters. This is often achieved by capturing images of a known calibration pattern or using specialized calibration software.

Once the distortion parameters are obtained, undistortion maps are preferably calculated based on the distortion model used. These maps establish the pixel correspondence between the distorted and undistorted images. With the undistortion maps in hand, the image is then undistorted through image remapping. Each pixel in the distorted image is transformed according to the undistortion maps, rectifying the distortion.

Interpolation techniques may be used to estimate pixel values for areas without a direct correspondence in the undistorted image.

The result is preferably an undistorted image that appears as if it were captured with a flat or undistorted camera lens.

4. Deep learning separation:
A semi-transparent mirror, as depicted in Figure 3, may facilitate simultaneous capture of both front-facing and downward-facing images by the camera.

These two images can then be effectively separated using various AI-driven techniques, as illustrated in Fig. 5, showcasing the versatility of the approach.

One commonly used method may involve employing an autoencoder architecture. Here, the AI module is designed to ingest the combined image and produce distinct front-facing and downward-facing images as outputs. Another approach preferably entails leveraging a diffusion model, where the AI module gradually teases apart the overlaid images based on probabilistic principles.

Moreover, a "deep adversarial decomposition" technique, inspired by the methodology disclosed in document [1] (which is hereby cited and incorporated by reference) harnesses generative adversarial networks (GANs) to accomplish this separation task. This may involve training the GAN on specific images relevant to the use-case and mirror setup, ensuring robust disentanglement.

These preferred strategies exemplify just a few of the myriad possibilities to implement the image separation module, showcasing the flexibility of the approach.

A flowchart of the process, with digital undistortion and deep learning separation, is shown in Fig. 6.

The invention also includes a controlling device (not shown) for controlling the apparatus. The controlling device includes the camera system 10 as described and means adapted to execute the steps of the control method as described. For example, the controlling device may be a driver assistance and/or vehicle navigating system for a vehicle.

Furthermore, the invention includes a computer program (not shown) comprising instructions to cause the controlling device to execute the steps of said control method. Furthermore, the invention includes a computer-readable storage medium having stored thereon said computer program.

### Referenced literature:

[1] Zou, Zhengxia, Sen Lei, Tianyang Shi, Zhenwei Shi, and Jieping Ye. 2020. "Deep Adversarial Decomposition: A Unified Framework for Separating Superimposed Images." In 2020 IEEE/CVF Conference on Computer Vision and Pattern Recognition (CVPR), 12803-13. Seattle, WA, USA: IEEE. https://doi.org/10.1109/CVPR42600.2020.01282.

### REFERENCE SIGNS

10 camera system
12 camera device
14 optical component
15 curved surface
16 system field-of-view
16a first system field-of-view
16b second system field-of-view
18 superimposed image
20a (undistorted) first image
20b (undistorted) second image
22 computing module
24a (distorted) first image
24b (distorted) second image
26a first undistortion map
26b second undistortion map
FD forward direction
DD downward direction
*α* separating angle
*β* opening angle

## Claims

1. A control method in an apparatus having a camera system (10) for recording an environment of said apparatus, the camera system (10) including a camera device (12) for capturing an image across a device field-of-view of the camera device (12) and an optical component (14) for partitioning the device field-of-view at least into a first system field-of-view (16a) of the camera system (10) and a second system field-of-view (16b) of the camera system (10), the second system field-of-view (16b) being different to the first system field-of-view (16a) such that the camera device (12) is capable of capturing a superimposed image (18) at least across the first system field-of-view (16a) and the second system field-of-view (16b), the method comprising:
a) By the camera system (10), recording the environment of the apparatus by capturing a superimposed image (18) at least across the first system field-of-view (16a) and the second system field-of-view (16b);
b) Processing by separating, from the superimposed image (18), at least a first image (20a, 24a) across the first system field-of-view (16a) only and/or a second image (20b, 24a) across the second system field-of-view (16b) only; and
c) Generating a control signal for controlling the apparatus based on the processing of step b).

2. The method according to claim 1, **characterized in that** step b) further comprises:
b1) Processing by applying one or more image transformations to the first image (24a) and/or the second image (24b) for correcting said images (24a, 24b) when distorted by the optical component (14), preferably by using one or more computer vision algorithms.

3. The method according to claim 2, **characterized in that** step b1) further comprises one or both of the following:
b1a) Processing by determining one or more undistortion maps (26a, 26b) as image transformations, the one or more undistortion maps (26a, 26b) mapping the distorted first image (24a) and/or the distorted second image (24b) onto a corresponding undistorted first image (20a) and/or corresponding undistorted second image (20b) during a calibration operation; and/or
b2a) Processing by interpolating one or more image areas of the first image (20a, 24a) and/or the second image (20b, 24b) when applying an image transformation thereto.

4. The method according to any of the preceding claims, **characterized in that** step b) further comprises:
b2) Separating by feeding the superimposed image (18) into a computing module (22), the computing module including a machine learning model, a neural network model, a generative adversarial network model, an autoencoder network model, a deep neural network model, and/or a diffusion neural network model.

5. A camera system (10) for recording an environment thereof, the camera system (10) including a camera device (12) for capturing an image across a device field-of-view of the camera device (12) and an optical component (14) for partitioning the device field-of-view at least into a first system field-of-view (16a) of the camera system (10) and a second system field-of-view (16b) of the camera system (10), the second system field-of-view (16b) being different to the first system field-of-view (16a) such that the camera device (12) is capable of capturing a superimposed image (18) at least across the first system field-of-view (16a) and the second system field-of-view (16b).

6. The camera system (10) according to claim 5, **characterized in that** the optical component (14) is configured semi-transparent and/or includes a mirror, a prism, and/or a lens.

7. The camera system (10) according to claim 5 or 6, **characterized in that** the first system field-of-view (16a) includes a reflected field-of-view reflected from the optical component (14) and/or the second system field-of-view (16b) includes a transmitted field-of-view transmitted through the optical component (14).

8. The camera system (10) according to any of claims 5 to 7, **characterized in that** the first system field-of-view (16a) and the second system field-of-view (16b):
- are arranged inclined to each other by a separating angle (*α*) between 0° and 180°, preferably in the range from 30° to 150°, more preferably from 45° to 135°, more preferably from 60° to 120°, more preferably from 80° to 100°, more preferably of and/or about 90°; and/or
- differ in a respective opening angle (*β*); and/or
- are disjoint.

9. The camera system (10) according to any of claims 5 to 8, **characterized in that** the first system field-of-view (16a) and/or the second system field-of-view (16b) include an opening angle (*β*) that is different to the opening angle (*β*) of the device field-of-view.

10. The camera system (10) according to any of claims 5 to 9, **characterized in that** the camera device (12) includes an image and/or video capturing means.

11. The camera system (10) according to any of claims 5 to 10, **characterized in that** the optical component (14) is configured for broadening and/or narrowing the first system field-of-view (16a) and/or the second system field-of-view (16b) with respect to the device field-of-view, preferably includes a curved surface (15) therefor.

12. A controlling device for controlling an apparatus, the controlling device having the camera system (10) according to any of claims 5 to 11 and means adapted to execute the steps of the method according to any of claims 1 to 4.

13. A computer program comprising instructions to cause the controlling device according to claim 12 to execute the steps of the method according to any of the claims 1 to 4.

14. A computer-readable storage medium having stored thereon the computer program of claim 13.
